# EUROPÄISCHE PATENTSCHRIFT

(11) **EP 1 369 304 B1**
(45) Veröffentlichungstag und Bekanntmachung des Hinweises auf die Patenterteilung: **31.08.2005**
(21) Anmeldenummer: 03101612.4
(22) Anmeldetag: 03.06.2003
(51) Int. Cl.: B60R 13/02, B60R 13/04, F16B 19/00

(54) **Vorrichtung zur formschlüssigen Befestigung von geformten oder extrudierten Kunststoffteilen, insbesondere an der Karosserie eines Kraftfahrzeugs**
Device for form-locking attachment of moulded or extruded plastic pieces, in particular to a vehicle body
Dispositif pour attacher avec liaison de forme des pièces en plastic moulées ou extrusées, en particulier à la carroserie d'un véhicule

(30) Priorität: 05.06.2002 DE 10224973
(43) Veröffentlichungstag der Anmeldung: 10.12.2003
(73) Patentinhaber: Metzeler Automotive Profile Systems GmbH, 88131 Lindau/Bodensee (DE)
(72) Erfinder: Palicki, Dirk, 88138 Hergensweiler (DE); Hochholzer, Eckehard, 88239 Wangen (DE); Dieterle, Heinz-Jürgen, 88167 Röthenbach (DE); Sutter, Anton, 88171 Weiler/Simmerberg (DE)
(74) Vertreter: Schober, Christoph D.

(56) Entgegenhaltungen:
- US-A- 3 234 612
- US-A- 3 803 670
- US-A- 5 921 510
- US-B1- 6 349 987

## Beschreibung

Die Erfindung betrifft eine Vorrichtung zur formschlüssigen Befestigung von geformten oder extrudierten Kunststoffteilen, insbesondere an der Karosserie eines Kraftfahrzeugs. Die Vorrichtung ist mit einem mit dem zu befestigenden Kunststoffteil verbindbaren Fußabschnitt und einem sich in einer Befestigungsrichtung an den Fußabschnitt anschließenden Halteabschnitt versehen. Der Halteabschnitt überragt zur Bildung einer Anlagefläche den Fußabschnitt senkrecht zur Befestigungsrichtung. Der Fußabschnitt und der Halteabschnitt sind aus einem elastisch verformbaren Werkstoff gefertigt. Zumindest der Halteabschnitt weist einen Hohlraum auf, der als sich in einer senkrecht zur Befestigungsrichtung verlaufenden Normalenrichtung erstreckender Durchbruch ausgestaltet ist. In dem Durchbruch ist wenigstens eine Trennwand angeordnet, die sich in einer senkrecht zur Normalenrichtung verlaufenden Ebene erstreckt.

Eine derartige, im allgemeinen auch als Haltepilz bezeichnete Vorrichtung dient dazu, ein etwa durch Spritzgießen oder Extrusion gefertigtes Kunststoffteil auf einfache Weise zu befestigen. Hierbei handelt es sich um Kunststoffteile, die insbesondere aus vulkanisierbaren oder thermoplastischen Elastomeren hergestellt sind. Zu diesem Zweck wird der mit dem zu befestigenden Kunststoffteil verbundene Haltepilz in eine Öffnung eines Bauteils, beispielsweise ein Rahmen der Karosserie eines Kraftfahrzeugs, eingeführt, die zwar einen größeren Durchmesser als der Fußabschnitt aber einen geringeren Durchmesser als der den Fußabschnitt überragenden Halteabschnitt aufweist. Der Halteabschnitt wird demzufolge beim Einführen in die Öffnung zusammengedrückt und weitet sich nach dem Durchqueren der Öffnung derart auf, daß die an dem Halteabschnitt ausgebildete Anlagefläche die Öffnung auf der dem zu befestigenden Kunststoffteil abgewandten Seite hintergreift. Auf diese Weise ergibt sich eine formschlüssige Verbindung, die das Kunststoffteil festhält.

Die Wirksamkeit des sich ergebenden Formschlusses hängt in erster Linie von der Größe der Anlagefläche ab. Denn je größer die Anlagefläche ist, welche die Öffnung hintergreift, um so größer ist die Abzugskraft, die erforderlich ist, den Halteabschnitt aus der Öffnung herauszuziehen. Maßgeblich für einen wirksamen Formschluß ist zudem die Steifigkeit, die der Halteabschnitt aufweist. Außer durch den Werkstoff wird die Steifigkeit auch durch die Geometrie des Halteabschnitts beeinflußt. Bekannte Haltepilze im voranstehenden Sinne, wie sie beispielsweise in der DE 85 34 283 U1 für die Befestigung einer extrudierten Verglasungsdichtung und in der DE 43 08 215 C1 für die Befestigung einer Spaltdichtung an einem Schiebedach beschrieben sind, weisen einen als Durchbruch ausgestalteten Hohlraum auf, der die Steifigkeit des Halteabschnitts verringert. Aufgrund der durch das Vorsehen des Hohlraums verringerten Steifigkeit vermindert sich zwar die zum Lösen des Formschlusses erforderliche Abzugskraft, zugleich erhöht sich aber die Verformungsfähigkeit des Halteabschnitts. Vor allem Haltepilze, die aus einem vergleichsweise harten Werkstoff bestehen, wie beispielsweise einem thermoplastischen Elastomer (TPE), laufen Gefahr, sich bei nicht ausreichender Verformungsfähigkeit plastisch zu verformen mit der Folge, daß die formschlüssige Verbindung beeinträchtigt wird. Das Vorsehen eines Hohlraums zur Erhöhung der Verformungsfähigkeit des Halteabschnitts ist daher in der Regel unerlässlich.

Die US 3,309,955 beschreibt einen Befestigungsclip, der zum Verbinden von zwei Bauteilen dient. Der bekannte Befestigungsclip weist einen Schaft auf, der an einem Ende mit einem Kopf versehen ist. Der Kopf lässt sich in eine Bohrung eines ersten Bauteils eindrehen und ist zu diesem Zweck mit einer Nut, die den Rand der Bohrung aufnimmt, und einer im wesentlichen winkelförmigen Ausnehmung, die ermöglicht, den Kopf in die Bohrung einzudrehen, versehen. Der Schaft setzt sich aus zwei voneinander beabstandeten Seitenabschnitten zusammen, die einen Hohlraum einschließen. In dem Hohlraum ist ein die Seitenabschnitte miteinander verbindender Steg angeordnet, der zur Versteifung des Schafts dient. Ein Befestigungsclip, der sich aus einem Kopf und einem Schaft zusammensetzt, wird außerdem in der US 2,909,957 beschrieben. Der Schaft weist zwei voneinander beabstandete Seitenwandungen auf, die durch eine Vielzahl an Querstegen miteinander verbunden sind. Die Querstege sind verhältnissmäßig dünn und biegsam und in Form eines Bogens gekrümmt.

Die US 3,803,670 offenbart einen gattungsgemäßen Befestigungsclip zum Verbinden von einander überlappenden Platten, die mit einem Durchgangsloch versehen sind. Der Befestigungsclip weist einen Fußabschnitt, der durch zwei voneinander beabstandete Rastschenkel gebildet ist, und einen den Fußabschnitt überragenden Halteabschnitt auf. Die Rastschenkel sind an ihren freien Enden mit einer Verdickung versehen, die formschlüssig eine Befestigungsscheibe hintergreift. Zwischen den Rastschenkeln ist eine Trennwand angeordnet, die sich in eine Richtung entsprechend der Ausrichtung der Rastschenkel erstreckt. Dabei ist eine ausreichende Biegsamkeit und Elastizität der Rastschenkel dann gegeben, wenn das freie Ende der Trennwand an der Innenfläche der Befestigungsscheibe endet.

Als Nachteil der bekannten Haltepilze und Befestigungsclipse hat sich herausgestellt, daß die Steifigkeit und damit die Verformungsfähigkeit des Halteabschnitts in Hinsicht auf einen wirksamen Formschluß einerseits und eine einfache Montage andererseits nur mühsam an den jeweiligen Anwendungsfall anzupassen ist. Die Vorgabe eines bestimmten Werkstoffes, etwa wenn der Haltepilz einstückig mit dem zu befestigenden Kunststoffteil ausgebildet ist, stellt eine weitere Beschränkung dar, welche die Möglichkeiten schmälert, die Verformungsfähigkeit des Halteabschnitts zu variieren.

Der Erfindung liegt die **Aufgabe** zugrunde, eine Vorrichtung der eingangs genannten Art dahingehend weiterzubilden, daß sich auf verhältnismäßig einfache Weise die Verformungsfähigkeit des Halteabschnitts in Hinsicht auf den jeweiligen Anwendungsfall anpassen läßt.

Zur **Lösung** dieser Aufgabe wird eine Vorrichtung mit den Merkmalen gemäß Anspruch 1 vorgeschlagen.

Die erfindungsgemäße Vorrichtung weist einen Durchbruch auf, der durch eine Deckenwandung des Halteabschnitts begrenzt ist. Zudem ist die Trennwand durch einen Spalt von der Deckenwandung beabstandet. Indem der Durchbruch durch eine Deckenwandung des Halteabschnitts begrenzt ist, trägt die Deckenwandung zu einer gezielten Versteifung des Halteabschnitts bei, und zwar derart, daß die Anlagefläche sicher an einer eine Öffnung, die den Halteabschnitt aufnimmt, umgebenden Fläche anliegt.

Ferner ermöglicht der Spalt zwischen der Trennwand und der Deckenwandung, daß sich die Trennwand und die Deckenwandung unabhängig voneinander verformen können. Diese konstruktive Entkopplung stellt eine systematische Anpassung der Verformungsfähigkeit des Halteabschnitts durch eine Variation der Dicke der Trennwand sicher.

Die solchermaßen ausgestaltete Vorrichtung beruht zudem auf der Erkenntnis, dass die in dem Hohlraum angeordnete Trennwand die Steifigkeit und damit die Verformungsfähigkeit des Halteabschnitts nachdrücklich beeinflußt. Durch eine in fertigungstechnischer Hinsicht einfach zu realisierende Variation der Dicke und Größe der Trennwand läßt sich die Verformungsfähigkeit des Halteabschnitts variabel an den jeweiligen Anwendungsfall anpassen. Darüber hinaus stellt die Trennwand eine konstruktive Maßnahme dar, die sich in einfach zu beherrschender Weise mit der Ausgestaltung der Anlagefläche des Halteabschnitts korrelieren läßt, um etwa die zum Lösen des Formschlusses erforderliche Abzugskraft gezielt festzulegen.

In Hinsicht auf eine verhältnismäßig hohe Verformungsfähigkeit ist der Hohlraum als ein zumindest den Halteabschnitt in einer senkrecht zur Befestigungsrichtung verlaufenden Normalenrichtung durchsetzender Durchbruch ausgestaltet. Indem sich die Trennwand in einer senkrecht zur Normalenrichtung verlaufenden Ebene erstreckt, lässt sich die Trennwand in einer Hauptachse der erfindungsgemäßen Vorrichtung ausrichten, so daß beim Zusammendrükken eine elastische Knickung der Trennwand auftritt, die durch ein vergleichsweise hohes Widerstandsmoment gekennzeichnet ist. Auf diese Weise wird die Verformungsfähigkeit des Halteabschnitts vorwiegend durch die Dicke der Trennwand in der Befestigungsrichtung bestimmt.

Vorteilhafte Ausgestaltungen der erfindungsgemäßen Vorrichtung stellen die Gegenstände der Ansprüche 2 bis 8 dar.

Bevorzugt durchsetzt der Durchbruch den Fußabschnitt. Indem der Hohlraum sowohl in dem Halteabschnitt als auch in dem Fußabschnitt ausgebildet ist, läßt sich der erfindungsgemäße Haltepilz bequem zusammendrücken, um in eine Öffnung eingeführt zu werden.

Zur Anpassung der Verformungsfähigkeit des Halteabschnitts ist es ebenso zweckmäßig die Trennwand durch einen Spalt von dem zu befestigenden Kunststoffteil zu beabstanden.

In einer bevorzugten Ausgestaltung der erfindungsgemäßen Vorrichtung ist der Halteabschnitt mit einer sich in Befestigungsrichtung konisch verjüngenden Mantelfläche versehen. Die dem Halteabschnitt somit eine beispielsweise annähernd kegelstumpfförmige Form verleihende Mantelfläche erleichtert das Einführen in die Öffnung eines Bauteils, an dem das Kunststoffteil zu befestigen ist.

Weiterhin ist in einer bevorzugten Weiterbildung der erfindungsgemäßen Vorrichtung vorgesehen, daß die Anlagefläche bezüglich der Befestigungsrichtung schräg verläuft. Eine schräg verlaufende Anlagefläche erleichtert das Lösen des Formschlusses und trägt so zu einer recyclinggerechten Demontage bei.

Um eine handhabungsgerechte Montage der erfindungsgemäßen Vorrichtung zu gewährleisten, sind der Fußabschnitt und der Halteabschnitt im Querschnitt bevorzugt annähernd kreisförmig.

In Hinsicht auf eine einfache und in wirtschaftlicher Hinsicht kostengünstige Fertigung sind in einer vorteilhaften Ausgestaltung der erfindungsgemäßen Vorrichtung der Fußabschnitt und der Halteabschnitt einstückig ausgebildet und vorzugsweise durch Spritzgießen gefertigt. Der somit als Formteil ausgebildete Haltepilz läßt sich bequem in der Normalenrichtung entformen, so daß auch bei etwaigen Fertigungsungenauigkeiten eine für eine zuverlässige Befestigung erforderliche akkurate Geometrie von Fußabschnitt und Halteabschnitt in der Befestigungsrichtung sichergestellt ist.

Schließlich wird in vorteilhafter Weise eine einteilige Ausgestaltung der erfindungsgemäßen Vorrichtung mit dem zu befestigenden Kunststoffteil vorgeschlagen. Die integrierte Ausgestaltung des Haltepilzes gewährleistet im Unterschied zu etwa separaten Befestigungsclips eine einfache und praxisgerechte Montage des Kunststoffteils.

Einzelheiten und weitere Vorteile der erfindungsgemäßen Vorrichtung ergeben sich aus der nachfolgenden Beschreibung zweier bevorzugter Ausführungsbeispiele. In der die Ausführungsbeispiele lediglich schematisch darstellenden Zeichnung veranschaulichen im einzelnen:
- Fig. 1: einen Schnitt durch einen Haltepilz entlang der Linie I-I in Fig. 2a;
- Fig. 2a: einen Schnitt durch den Haltepilz gemäß Fig. 1 entlang der Linie II-II in Fig. 1 und
- Fig. 2b: eine Darstellung gemäß Fig. 2a einer alternativen Ausführungsform des Haltepilzes.

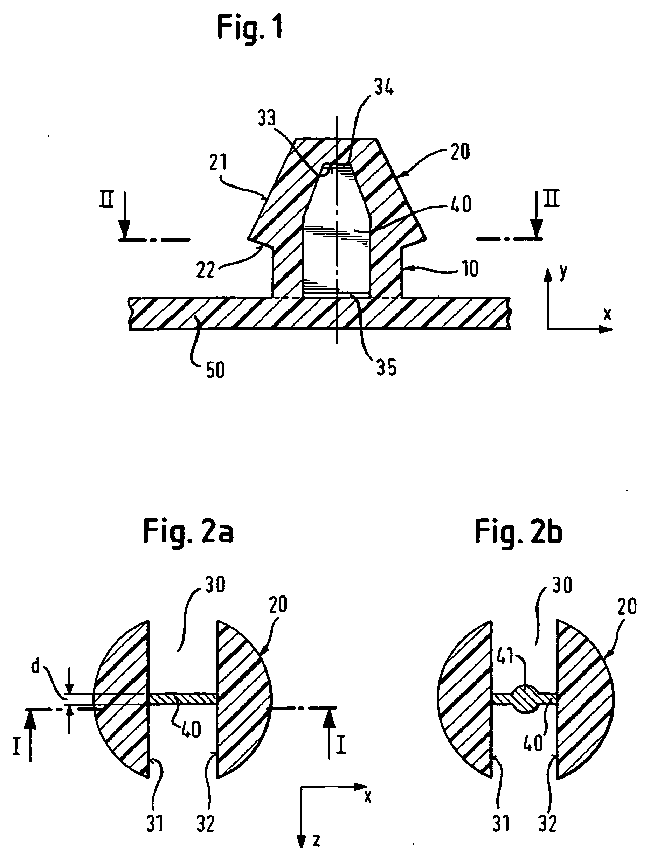

In Fig. 1 ist eine aus einem elastisch verformbaren Werkstoff bestehende Vorrichtung zur formschlüssigen Befestigung eines aus Kunststoff, beispielsweise EPDM oder TPE, gefertigten Formteils 50 gezeigt. Die Vorrichtung stellt einen sogenannten Haltepilz dar, der sich aus einem Fußabschnitt 10 und einem sich in einer Befestigungsrichtung y anschließenden Halteabschnitt 20 zusammensetzt. Der Fußabschnitt 10 und der Halteabschnitt 20 sind im Querschnitt annähernd kreisförmig ausgestaltet und durch Spritzgießen einteilig mit dem Formteil 50 gefertigt.

Wie Fig. 1 ferner erkennen läßt, weist der Halteabschnitt 20 eine im wesentlichen kegelstumpfförmige Form auf, die durch eine sich in Befestigungsrichtung y konisch verjüngende Mantelfläche 21 gebildet wird. Die Mantelfläche 21 geht an dem breitesten Durchmesser des Halteabschnitts 20 in eine Anlagefläche 22 über, die dem Formteil 50 zugewandt ist und bezüglich der Befestigungsrichtung y schräg verläuft.

Der Fußabschnitt 10 und der Halteabschnitt 20 sind zudem mit einem Hohlraum versehen, der als sich in einer senkrecht zur Befestigungsrichtung y verlaufenden Normalenrichtung z erstreckender Durchbruch 30 ausgestaltet ist. Wie insbesondere die Fig. 2a und 2b erkennen lassen, ist in dem Durchbruch 30 eine elastisch verformbare Trennwand 40 angeordnet, die sich in einer senkrecht zur Normalenrichtung z, das heißt in Befestigungsrichtung y und einer dazu senkrechten Querrichtung x verlaufenden Ebene, erstreckt. Die Trennwand 40 weist eine Dicke d in der Normalenrichtung z auf und verläuft zwischen zwei den Durchbruch 30 bildenden Seitenwandungen 31, 32. Zu einer den Durchbruch 30 begrenzenden Deckenwandung 33 ist die Trennwand 40 im vorliegenden Fall durch einen Spalt 34 beabstandet. Das Vorsehen des Spalts 34 zwischen Trennwand 40 und Deckenwandung 33 ist fakultativ und läßt sich beispielsweise durch Einschneiden des spritzgegossenen Haltepilzes auf einfache Weise realisieren. Die Trennwand 40 ist darüber hinaus durch einen gleichfalls fakultativ vorsehbaren Spalt 35 von dem Formteil 50 beabstandet. Die Spalte 34, 35 ermöglichen, daß sich bei einem Zusammendrücken des Halteabschnitts 20 in Querrichtung x die Trennwand 40 unabhängig von der Deckenwandung 33 und dem Formteil 50 verformen kann.

Der zuvor beschriebene Haltepilz ermöglicht eine formschlüssige Befestigung des Formteils 50 an einem anderen Bauteil, beispielsweise einem metallenen Rahmen der Karosserie eines Kraftfahrzeugs. Zu diesem Zweck wird der Halteabschnitt 20 in eine Öffnung des Bauteils eingeführt, die einen Durchmesser aufweist, der geringfügig größer ist als der Durchmesser des Fußabschnitts 10 und kleiner ist als der größte Durchmesser des Halteabschnitts 20 im Bereich des Übergangs von Mantelfläche 21 auf Anlagefläche 22. Bei in die Öffnung eingeführtem Halteabschnitt 20 hintergreift die Anlagefläche 22 eine dem Formteil 50 abgewandte und die Öffnung umrandende Fläche des Bauteils, wodurch sich ein Formschluß ergibt.

Um den Halteabschnitt 20 in die Öffnung des Bauteils einführen zu können, ist es erforderlich, den Haltepilz zumindest in Querrichtung x zu verformen. Die Verformungsfähigkeit des Haltepilzes wird dabei vornehmlich durch die Ausgestaltung, insbesondere die Dicke d, der Trennwand 40 bestimmt. Je größer die Dicke d ist, um so höher ist die Steifigkeit des Haltepilzes in Querrichtung x. Die Steifigkeit kann darüber hinaus durch eine bestimmte Gestaltung der Trennwand 40, beispielsweise mittels einer Verdickung 41, wie in Fig. 2b gezeigt, gezielt angepaßt werden. Die Ausgestaltung der Trennwand 40 kann in fertigungstechnischer Hinsicht einfach variiert werden, um eine für den jeweiligen Anwendungsfall optimierte Verformungsfähigkeit des Halteabschnitts 20 zu erreichen. Nicht zuletzt eröffnet die Möglichkeit, die Steifigkeit und damit die Verformungsfähigkeit des Halteabschnitts 20 durch eine entsprechende Ausgestaltung der Trennwand 40 zu variieren, eine Standardisierung, die eine rationelle und kostengünstige Herstellungsweise sicherstellt.

### Bezugszeichenliste

- 10: Fußabschnitt

- 20: Halteabschnitt
- 21: Mantelfläche
- 22: Anlagefläche

- 30: Durchbruch
- 31: Seitenwandung
- 32: Seitenwandung
- 33: Deckenwandung
- 34: Spalt
- 35: Spalt

- 40: Trennwand
- 41: Verdickung

- 50: Formteil

- d: Dicke
- x: Querrichtung
- y: Befestigungsrichtung
- z: Normalenrichtung

## Patentansprüche

1. Vorrichtung zur formschlüssigen Befestigung von geformten oder extrudierten Kunststoffteilen (50), insbesondere an der Karosserie eines Kraftfahrzeugs, mit einem mit dem zu befestigenden Kunststoffteil (50) verbindbaren Fussabschnitt (10) und einem sich in einer Befestigungsrichtung (y) an den Fussabschnitt (10) anschliessenden Halteabschnitt (20), der zur Bildung einer Anlagefläche (22) den Fussabschnitt (10) senkrecht zur Befestigungsrichtung (y) überragt, wobei der Fussabschnitt (10) und der Halteabschnitt (20) aus einem elastisch verformbaren Werkstoff gefertigt sind und zumindest der Halteabschnitt (20) einen Hohlraum (30) aufweist, der als sich in einer senkrecht zur Befestigungsrichtung (y) verlaufenden Normalenrichtung (z) erstreckender Durchbruch (30) ausgestaltet ist, wobei in dem Durchbruch (30) wenigstens eine elastisch verformbare Trennwand (40) angeordnet ist, die sich in einer senkrecht zur Normalenrichtung (z) verlaufenden Ebene erstreckt, **dadurch gekennzeichnet, dass** der Durchbruch (30) durch eine Deckenwandung (33) des Halteabschnitts (20) begrenzt ist und die Trennwand (40) durch einen Spalt (34) von der Deckenwandung (33) beabstandet ist.

2. Vorrichtung nach Anspruch 1, **dadurch gekennzeichnet, dass** der Durchbruch (30) den Fussabschnitt (10) durchsetzt.

3. Vorrichtung nach Anspruch 2, **dadurch gekennzeichnet, dass** die Trennwand (40) durch einen Spalt (35) von dem zu befestigenden Kunststoffteil (50) beabstandet ist.

4. Vorrichtung nach einem der Ansprüche 1 bis 3, **dadurch gekennzeichnet, dass** der Halteabschnitt (20) mit einer sich in Befestigungsrichtung (y) konisch verjüngenden Mantelfläche (21) versehen ist.

5. Vorrichtung nach einem der Ansprüche 1 bis 4, **gekennzeichnet durch** eine bezüglich der Befestigungsrichtung (y) schräg verlaufende Anlagefläche (22).

6. Vorrichtung nach einem der Ansprüche 1 bis 5, **dadurch gekennzeichnet, dass** der Fussabschnitt (10) und der Halteabschnitt (20) im Querschnitt annährend kreisförmig sind.

7. Vorrichtung nach einem der Ansprüche 1 bis 6, **dadurch gekennzeichnet, dass** der Fussabschnitt (10) und der Halteabschnitt (20) einstückig ausgebildet und vorzugsweise durch Spritzgiessen gefertigt sind.

8. Vorrichtung nach einem der Ansprüche 1 bis 7, **gekennzeichnet durch** eine einteilige Ausgestaltung mit dem zu befestigenden Kunststoffteil (50).

## Claims

1. A device for fastening molded or extruded plastics parts (50), more particularly to an automotive body, by positive locking, comprising a base section (10) joinable to said plastics part (50) to be fastened, and a retaining section (20) adjoining said base section (10) in a fastening direction (y), said retaining section (20) protruding beyond said base section (10) perpendicular to said fastening direction (y) for forming a contact face (22), said base section (10) and said retaining section (20) being made of an elastically deformable material, and at least said retaining section (20) comprising a cavity (30) which is configured as a through-hole extending in a normal direction (z) perpendicular to said fastening direction (y), wherein at least one elastically deformable partition (40) is arranged in the through-hole (30) and extends in a plane perpendicular to the normal direction (z), **characterized in that** the through-hole (30) is limited by a top wall (33) of said retaining section (20) and the partition (40) is spaced away by a gap (34) from the top wall (33).

2. The device as set forth in claim 1, **characterized in that** said through-hole (30) crosses said base section (10).

3. The device as set forth in claim 2, **characterized in that** said partition (40) is spaced away from the plastics part (50) to be fastened by a gap (35).

4. The device as set forth in claims 1 to 3, **characterized in that** said retaining section (20) includes a shell wall (21) conically tapered in said fastening direction (y).

5. The device as set forth in claims 1 to 4, **characterized by** a contact face (22) which is slanted to said fastening direction (y).

6. The device as set forth in any of the claims 1 to 5, **characterized in that** said base section (10) and said retaining section (20) are approximately circular in cross-section.

7. The device as set forth in any of the claims 1 to 6, **characterized in that** said base section (10) and said retaining section (20) are configured in one-piece and preferably produced by injection molding.

8. The device as set forth in any of the claims 1 to 7, **characterized by** a one-piece configuration with said plastics part (50) to be fastened thereby.

## Revendications

1. Dispositif pour la fixation par coopération de formes de pièces de matière plastique (50) moulées ou extrudées, en particulier sur la carrosserie d'un véhicule automobile, comportant un tronçon de pied (10) susceptible d'être relié à la pièce de matière plastique (50) à fixer et un tronçon de retenue (20) se raccordant au tronçon de pied (10) dans une direction de fixation (y), lequel dépasse du tronçon de pied (10) perpendiculairement à la direction de fixation (y) pour former une surface d'appui (22), le tronçon de pied (10) et le tronçon de retenue (20) étant réalisés en une matière élastiquement déformable, et au moins le tronçon de retenue (20) présentant une cavité (30) qui est réalisée sous forme de percée (30) s'étendant dans une direction normale (z) perpendiculaire à la direction de fixation (y), et dans la percée (30) est agencée au moins une cloison de séparation (40) élastiquement déformable qui s'étend dans un plan perpendiculaire à la direction normale (z), **caractérisé en ce que** la percée (30) est limitée par une paroi de plafond (33) du tronçon de retenue (20), et la cloison de séparation (40) est espacée de la paroi de plafond (33) par une fente (34).

2. Dispositif selon la revendication 1, **caractérisé en ce que** la percée (30) traverse le tronçon de pied (10).

3. Dispositif selon la revendication 2, **caractérisé en ce que** la cloison de séparation (40) est espacée de la pièce de matière plastique (50) à fixer, par une fente (35).

4. Dispositif selon l'une des revendications 1 à 3, **caractérisé en ce que** le tronçon de retenue (20) est pourvu d'une surface enveloppe (21) se rétrécissant en forme conique en direction de fixation (y).

5. Dispositif selon l'une des revendications 1 à 4, **caractérisé par** une surface d'appui (22) s'étendant en oblique par rapport à la direction de fixation (y).

6. Dispositif selon l'une des revendications 1 à 5, **caractérisé en ce que** le tronçon de pied (10) et le tronçon de retenue (20) sont réalisés avec une section transversale approximativement de forme circulaire.

7. Dispositif selon l'une des revendications 1 à 6, **caractérisé en ce que** le tronçon de pied (10) et le tronçon de retenue (20) sont réalisés d'un seul tenant et fabriqués de préférence par moulage par injection.

8. Dispositif selon l'une des revendications 1 à 7, **caractérisé par** une réalisation d'une seule pièce avec la pièce de matière plastique à fixer.
